# EUROPÄISCHE PATENTSCHRIFT

(11) **EP 1 617 169 B1**
(45) Veröffentlichungstag und Bekanntmachung des Hinweises auf die Patenterteilung: **08.08.2007**
(21) Anmeldenummer: 05013566.4
(22) Anmeldetag: 23.06.2005
(51) Int. Cl.: F42B 15/04, G02B 6/44

(54) **Einrichtung zur Tiefensteuerung für einen Spulenaufschwimmkörper**
Depth control device for a float connected to a bobbin
Régulateur de profondeur pour un flotteur porté par une bobine

(30) Priorität: 15.07.2004 DE 102004034307
(43) Veröffentlichungstag der Anmeldung: 18.01.2006
(73) Patentinhaber: LFK-Lenkflugkörpersysteme GmbH, 86529 Schrobenhausen (DE)
(72) Erfinder: Rühe, Jürgen, 81545 München (DE); Plank, Friedrich, 83059 Kolbermoor (DE); Becker, Wilfried, 83052 Bruckmühl (DE); Friedrich, Jeannette, 85386 Eching (DE)
(74) Vertreter: Hummel, Adam

(56) Entgegenhaltungen:
- EP-A- 0 412 016
- WO-A-03/106914
- US-A- 5 419 512

## Beschreibung

Die Erfindung betrifft eine Einrichtung zur Tiefensteuerung für einen unter der Wasseroberfläche befindlichen Spulenaufschwimmkörper, welcher wenigstens eine Lichtwellenleiterspule enthält, wobei das erste Ende des Lichtwellenleiters mit einem Unterwasserfahrzeug verbunden ist und das zweite Ende mit einem sich nach dem Start vom Unterwasserfahrzeug weg bewegenden mobilen Wirkkörper verbunden ist.

Anwendung finden derartige Spulenkörper bei Unterwasserfahrzeugen, insbesondere Unterseebooten, von denen aus mobile Wirkkörper, die in aller Regel über einen eigenen Antrieb verfügen, gestartet werden. Unter mobilen Wirkkörpern wurden bislang Torpedos und ähnliche Geräte verstanden. Aus der WO 03/106914 A1 ist eine vergleichbare Anordnung bekannt geworden. Von einem ersten mobilen Gerät, beispielsweise einem Unterseeboot, wird ein weiteres mobiles Gerät, in diesem Beispiel ein Torpedo, gestartet, wobei sich beide mobile Geräte auf voneinander unabhängigen Kursen unter der Wasseroberfläche bewegen. Die in beide Richtungen wirksame Datenverbindung wird über Lichtwellenleiter vollzogen, wobei zwischen den mobilen Geräten ein Spulenaufschwimmkörper vorgesehen ist, der eine oder zwei Spulen für Lichtwellenleiter enthält. Da hiermit auch größere Entfernungen unter der Wasseroberfläche überbrückt werden können, dient das Konzept auch zur Verschleierung des tatsächlichen Startortes des weiteren mobilen Geräts. Aufgrund der gleichartigen Belastung beider Lichtwellenleiterabschnitte sind beide hinsichtlich der Armierung für den Unterwassereinsatz ausgelegt.

Seit neuerem werden auch Flugkörper entwickelt, die unter der Wasseroberfläche von Unterseebooten oder vergleichbaren Plattformen gestartet werden und nach dem Durchdringen der Wasseroberfläche in ein Luftziel gesteuert werden, wobei die Steuerung des Flugkörpers über eine Entfernung von 10 bis 50 km vorzugsweise mit Hilfe von Lichtwellenleitern abläuft. Um die notwendige Länge der Lichtwellenleiter zur Verfügung zu haben, wird hierbei ein Spulenaufschwimmkörper verwendet. Der Unterschied zur vorgenannten Situation besteht jedoch darin, dass zur Verbindung des ersten mobilen Geräts, beispielsweise eines Unterseebootes, und dem Spulenaufschwimmkörper ein stark armierter Lichtwellenleiter verwendet wird, der die Belastungen des Einsatzes unter der Wasseroberfläche aushält. Für die Verbindung des Spulenaufschwimmkörpers mit dem Flugkörper wird ein relativ zum vorgenannten Lichtwellenleiter dünner Lichtleiter verwendet, um den Anforderungen während des Fluges gerecht zu werden. Der Spulenaufschwimmkörper muss dabei in einem bestimmten Tiefenbereich nahe der Wasseroberfläche gehalten werden. Hierfür ist jedoch bei den bekannten Spulenaufschwimmkörpern nach dem Stand der Technik keine Einrichtung vorgesehen, die zum Einhalten einer bestimmten Wassertiefe über den Zeitbereich vom Start bis zum Erreichen des Zieles geeignet wäre.

Es ist deshalb Aufgabe der Erfindung, eine einfache Einrichtung zur Tiefensteuerung eines Spulenaufschwimmkörpers zu entwickeln, die verhindert, dass der Spulenaufschwimmkörper in Zeitraum vom Start des Wirkkörpers bis zum Treffer im Ziel nicht bis zur Wasseroberfläche auftaucht.

Die Erfindung wird auf einfache Weise mittels der im Anspruch 1 wiedergegebenen Merkmale gelöst. Vorteilhafte Weiterbildungen der Erfindung sind in den Unteransprüchen wiedergegeben.

Der besondere Vorteil der Erfindung ist darin zu sehen, dass mit wenig Aufwand eine Ventilsteuerung geschaffen wurde, die es ermöglicht, dass der Spulenaufschwimmkörper nach seiner Trennung vom Flugkörper nur bis zu einer vorwählbaren Tiefe unter der Wasseroberfläche aufschwimmt und anschließend aufgrund der Befüllung mit Wasser wieder absinkt. Diese Zeit genügt in aller Regel für die Flugzeit des Flugkörpers bis in das etwa 15 km entfernte Ziel. Die Einrichtung zur Tiefensteuerung arbeitet ausschließlich mechanisch, sie ist deshalb unempfindlich gegen Fehler, die bei elektronischen Steuerungen und Batterien auftreten können und unterliegt im Verwendungszeitraum keinem Alterungsprozess. Weiterhin werden Kosten eingespart und unnötiges Gewicht und Einbauvolumen vermieden.

Die Einrichtung zur Tiefensteuerung kann in vorteilhafter Weise auch eine Einrichtung zur Erhöhung des Auftriebs aufweisen, welche beim Absinken auf eine wählbare Tiefe auslösbar ist. Diese Einrichtung kommt dann zum Einsatz, wenn der Flugkörper über eine längere Strecke, beispielsweise über 30 bis 50 km, bis zum Ziel eingesetzt werden soll. Dann kann nach dem Öffnen des Ventils und der anschließenden Flutung des Innenraums beim Erreichen einer größeren Tiefe das weitere Absinken durch Erhöhen des Auftriebs unterbrochen werden und eine erneutes Aufschwimmen des Spulenaufschwimmkörpers erreicht werden. Dieser setzt sich wieder bis zum Erreichen derjenigen Tiefe fort, die für das Öffnen des Ventils mittels der erfindungsgemäßen Einrichtung maßgeblich ist. Je nach Art und Ausführung der Einrichtung zur Erhöhung des Auftriebs sind nacheinander auch mehrere derartige Aufschwimmzyklen möglich.

Als erste Möglichkeit zur Erhöhung des Auftriebs wird die Anbringung wenigstens einer Masse an der Außenseite des Spulenaufschwimmkörpers vorgeschlagen, die tiefenabhängig vom Spulenaufschwimmkörper lösbar ist. Eine andere vorteilhafte Möglichkeit zur Erhöhung des Auftriebs ist die Anordnung wenigstens eines Mittels, welches das im Innenraum des Spulenaufschwimmkörpers befindliche Wasser zumindest zum Teil verdrängt. In vorteilhafter Weise kann hier ein gaserzeugendes Mittel eingesetzt werden, welches tiefen- oder zeitabhängig in Gang gesetzt wird.

Eine weitere vorteilhafte Einrichtung, welche die Bewegungen des Spulenaufschwimmkörpers im Wasser verzögert, ist die Anordnung wenigstens eines ausklapp- oder ausfahrbaren Elements, das die Strömung an der Außenseite des Spulenauftriebskörpers stört und somit eine Verzögerung bewirkt.

Ein Ausführungsbeispiel der Erfindung ist in der Zeichnung schematisch vereinfacht dargestellt und wird im Folgenden näher beschrieben. Es zeigen
- Fig. 1:: eine Einrichtung zur Tiefensteuerung mittels eines Ventils in der verriegelten Ruheposition,
- Fig. 2:: die entriegelte Einrichtung nach Figur 1 während des Wassereintritts.
- Fig. 3:: einen vereinfachten Schnitt durch den Spulenaufschwimmkörper.

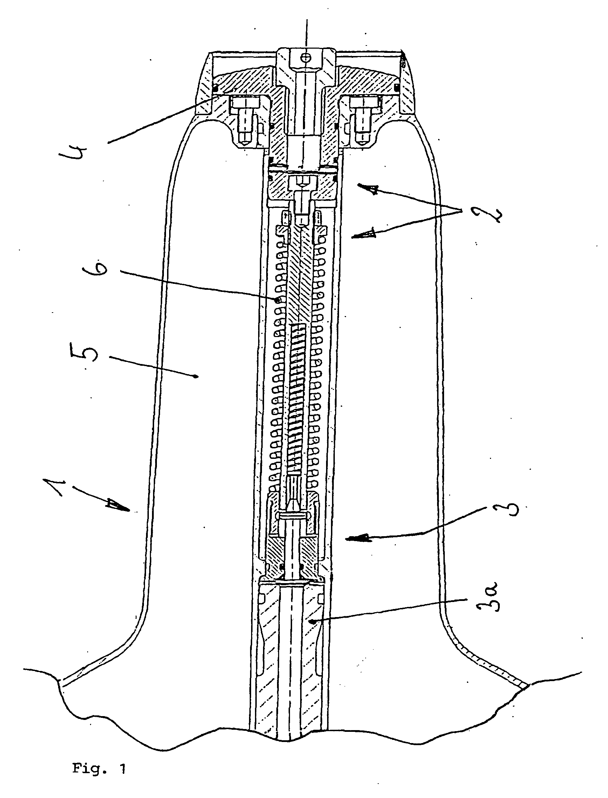

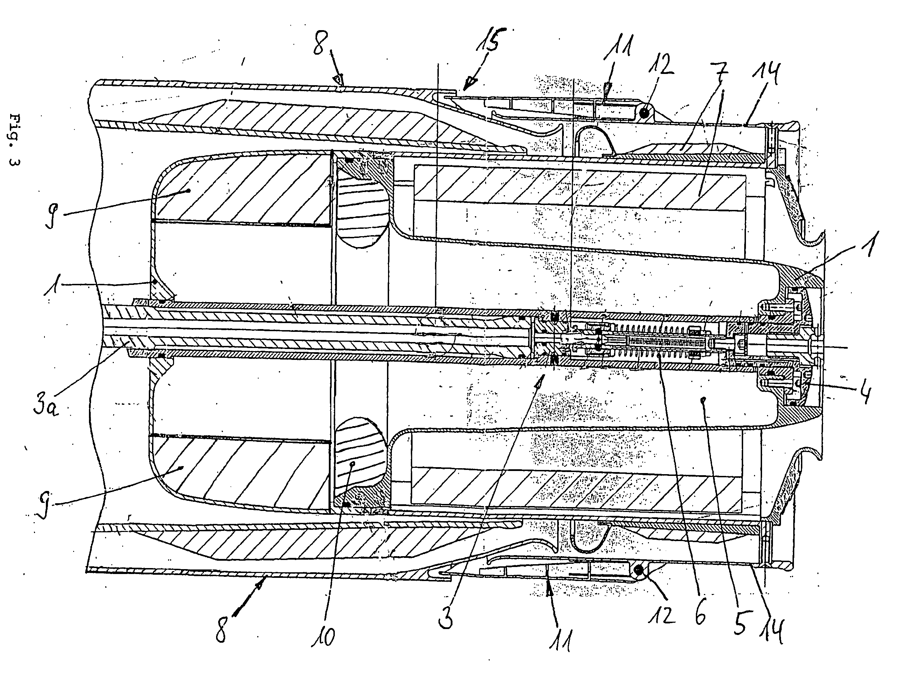

Die Figur 1 zeigt schematisch vereinfacht einen Schnitt durch eine Einrichtung zur Tiefensteuerung eines Spulenaufschwimmkörpers 1 mit Hilfe eines Ventils 4. Ein vereinfachter Gesamtüberblick zur Detaildarstellung in Figur 1 ist in Figur 3 wiedergegeben.

Der Spulenauftriebskörper 1 ist über stangenförmiges Element 3a mit dem mobilen Wirkkörper 8 verbunden. Dieses stangenförmige Element 3a ist einerseits an dem mobilen Wirkkörper 8 befestigt, andererseits mit dem Spulenaufschwimmkörper 1 mittels der Entsicherungsvorrichtung 3 lösbar verbunden. Im Rahmen des Ausführungsbeispiels wird davon ausgegangen, dass es sich bei dem mobilen Wirkkörper um einen unter der Wasseroberfläche von einem Unterwasserfahrzeug startbaren Flugkörper handelt. Andere Ausführungsformen des mobilen Wirkkörpers sind im Rahmen der Erfindung ebenso denkbar.

Im geschlossenen Gehäuse des Spulenaufschwimmkörpers 1 ist ein größerer Innenraum 5 vorgesehen, der mit Hilfe des Ventils 4 geflutet werden kann. Dieses Ventil 4 ist in dem in Figur 1 dargestellten Ruhezustand verschlossen. Es wird in der dargestellten Ruhestellung mit Hilfe der Entsicherungseinrichtung 3 im geschlossenen Zustand gegen die Kraft einer Druckfeder 6 festgehalten.

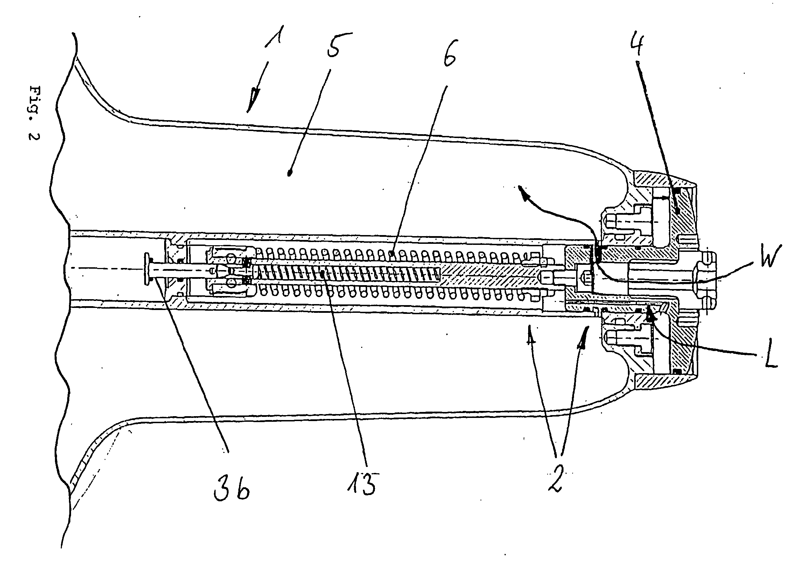

Die Figur 2 zeigt den Zustand, der nach der Trennung des Spulenaufschwimmkörpers 1 vom mobilen Wirkkörper 8 eintritt. Mittels der Trennung wird das am mobilen Wirkkörper befestigte Element 3a aus dem Spulenaufschwimmkörper 1 herausgezogen und der Entsicherungsbolzen 3b von der nicht näher beschriebenen Entsicherungsvorrichtung 3 federgetrieben 13 freigegeben. Infolge dessen Bewegung in die Arbeitsstellung wird das Ventil 4 freigegeben. Das Ventil 4 bewegt sich unter dem Druck der Feder 6 nach außen und öffnet damit den bisher verschlossenen Durchlass W, über den das Wasser von außen in den Innenraum 5 einströmt. Ein Druckausgleich findet über einen ebenfalls durch die Bewegung des Ventils 4 freigewordenen Kanal L statt. Als Folge der Befüllung des Innenraumes 5 mit Wasser steigt der Spulenaufschwimmkörper nicht mehr, sondern beginnt abzusinken.

Der Absinkvorgang hat zur Folge, dass beim Erreichen einer bestimmten Wassertiefe das Ventil 4 aufgrund des von außen einwirkenden Wasserdruckes wieder schließt und bis auf weiteres auch geschlossen bleibt.

In der Figur 3 ist ein vereinfachter Überblick über die Anordnung des erfindungsgemäßen Spulenaufschwimmkörpers 1 am Heck eines Flugkörpers 8 dargestellt. Die Halterung des Spulenaufschwimmkörpers 1 erfolgt in der Ruhestellung mittels des stangenförmigen Elements 3a, welches seinerseits am Flugkörper 8 befestigt ist. Neben der bereits beschriebenen Entsicherungseinrichtung 3 für das Ventil 4 und den Lichtleiterspulen 7 weist der Spulenaufschwimmkörper noch weitere vorteilhafte Einrichtungen auf. Auf der Außenseite 14 des Gehäuses des Spulenaufschwimmkörpers sind über den Umfang verteilt mehrere Befestigungseinrichtungen mit Drehachsen 12 angeordnet, wobei die Drehachsen zur Halterung mehrerer hydrodynamisch wirksamer Elemente 11 dienen. Diese Elemente 11 sind in ihrer Ruhestellung, das heißt solange der Spulenaufschwimmkörper 1 mittels des stangenartigen Elements 3a am Flugkörper 8 gehalten ist, am Gehäuse 8 des Flugkörpers in einer Aufnahme festgehalten. Nach Trennung des Flugkörpers vom Spulenaufschwimmkörper ist diese Halterung aufgehoben und die hydrodynamisch wirksamen Elemente können beispielsweise auch durch eine Feder unterstützt aufklappen. Im aufgeklappten Zustand bewirken sie durch Verwirbelung des vorbeiströmenden Wassers eine zusätzliche Verlangsamung der Relativbewegung des Spulenaufschwimmkörpers im Wasser. Dies gilt sowohl für den zuerst kurzzeitig einsetzenden Aufschwimmvorgang als auch für den nach dem Öffnen des Ventils beginnenden Sinkvorgang.

Durch die Verlangsamung der Sinkbewegung wird in vorteilhafter Weise erricht, dass sich der Spulenaufschwimmkörper innerhalb einer bestimmbaren Bandbreite der Wassertiefe aufhält solange der Flugkörper sich auf dem Marschflug zum Ziel befindet. In der Praxis genügt die zur Verfügung stehende Zeit für Flugstrecken von bis zu 15 km.

Der erfindungsgemäße Spulenaufschwimmkörper kann aber auch für Flugkörper verwendet werden, die für Entfernungen konzipiert wurden, die deutlich größer sind als 15 km. Das Problem hierbei ist, dass bei dem hierfür benötigten Flugzeiten der Spulenaufschwimmkörper aufgrund seiner Befüllung mit Wasser weiter absinken würde, was zu Problemen mit den Lichtleitern beim Abspulvorgang führen würde. Es ist also notwendig, den Spulenaufschwimmkörper in die Lage zu versetzen, dass der Absinkvorgang zumindest beendet wird und gegebenenfalls sogar wieder ein Aufschwimmvorgang eingeleitet wird. Zu diesem Zweck werden erfindungsgemäß verschiedene Mittel vorgeschlagen. Zum einen können am Spulenaufschwimmkörper Gewichte 9 vorgesehen sein, die vorzugsweise als Teile einer größeren Masse ausgestaltet sind. Diese Gewichte können bei Bedarf einzeln oder in Gruppen abgeworfen werden, worauf der Spulenaufschwimmkörper zu sinken aufhört und zu steigen beginnt.

Als Alternative oder Ergänzung wird erfindungsgemäß vorgeschlagen, im Innenraum 5 oder in dessen Nähe zumindest ein auftriebserzeugendes Mittel 10 vorzusehen, welches mit dem Innenraum 5 verbunden ist und die Verdrängung des Wassers aus dem Innenraum 5 bewirkt oder zumindest unterstützt. Als Beispiel für ein geeignetes auftriebserzeugendes Mittel 10 ist in Figur 3 ein Gasgenerator vereinfacht dargestellt, der beim Erreichen einer wählbaren Wassertiefe initiiert wird, wobei das von dem Gasgenerator erzeugte Gas das Wasser aus dem Innenraum 5 verdrängt. Es ist im Rahmen der Erfindung auch möglich, mehrere Gasgeneratoren zu verwenden, die je nach Bedarf gleichzeitig oder nacheinander ausgelöst werden.

Der Spulenaufschwimmkörper gewinnt bei beiden beschriebenen Methoden aufgrund seines nun wieder höheren Auftriebs an Höhe. Im Fall der Wasserverdrängung aus dem Innenraum mittels eines Gasgenerators läuft der Vorgang so lange weiter bis letztlich das Ventil 4 wieder öffnet und der bereits früher beschriebene Vorgang der Ventilöffnung und des Absinkens sich wiederholen kann. Damit können auch mehrere derartige Zyklen gefahren werden.

## Patentansprüche

1. Einrichtung zur Tiefensteuerung für einen unter der Wasseroberfläche befindlichen Spulenaufschwimmkörper (1), welcher wenigstens eine Lichtwellenleiterspule (7) enthält, wobei das erste Ende des Lichtwellenleiters mit einem Unterwasserfahrzeug verbunden ist und das zweite Ende mit einem sich nach dem Start vom Unterwasserfahrzeug weg bewegenden mobilen Wirkkörper (8) verbunden ist, **dadurch gekennzeichnet,**
- **dass** die Einrichtung zur Tiefensteuerung (2) eine Entsicherungsvorrichtung (3) aufweist, die bei der Trennung des Spulenaufschwimmkörpers (1) vom mobilen Wirkkörper (8, 3a) die Einrichtung zur Tiefensteuerung freigibt,
- **dass** die Einrichtung zur Tiefensteuerung (2) ein federbelastetes Ventil (4) zur Befüllung eines Innenraumes (5) des Spulenaufschwimmkörpers (1) enthält, welches entgegen dem von außen einwirkenden Wasserdruck mittels einstellbarer Federkraft (6) beim Erreichen der gewünschten Tiefe unter der Wasseroberfläche öffnet, und
- **dass** das Ventil (4) im Lauf des Absinkens des Spulenauftriebskörpers (1) aufgrund des von außen einwirkenden Wasserdruckes entgegen der Federkraft (6) schließt.

2. Einrichtung zur Tiefensteuerung für einen Spulenaufschwimmkörper gemäß Anspruch 1, **dadurch gekennzeichnet, dass** der Spulenaufschwimmkörper (1) eine Einrichtung zur Erhöhung des Auftriebs aufweist, welche beim Absinken auf eine wählbare Tiefe auslösbar ist.

3. Einrichtung zur Tiefensteuerung für einen Spulenaufschwimmkörper gemäß Anspruch 2, **dadurch gekennzeichnet, dass** die Einrichtung zur Erhöhung des Auftriebs wenigstens eine außen am Spulenaufschwimmkörper (1) angeordnete Masse (9) aufweist, welche tiefenabhängig vom Spulenaufschwimmkörper (1) lösbar ist.

4. Einrichtung zur Tiefensteuerung für einen Spulenaufschwimmkörper gemäß Anspruch 2, **dadurch gekennzeichnet, dass** die Einrichtung zur Erhöhung des Auftriebs wenigstens ein auftriebserzeugendes Mittel (10) enthält, welches das im Innenraum (5) des Spulenaufschwimmkörpers (1) befindliche Wasser zumindest teilweise verdrängt.

5. Einrichtung zur Tiefensteuerung für einen Spulenaufschwimmkörper gemäß Anspruch 4, **dadurch gekennzeichnet, dass** das auftriebserzeugende Mittel (10) über einen wählbaren Zeitraum Gas erzeugt.

6. Einrichtung zur Tiefensteuerung für einen Spulenaufschwimmkörper gemäß einem der Ansprüche 1 bis 5, **dadurch gekennzeichnet, dass** an der Außenseite des Spulenaufschwimmkörpers () wenigstens ein von einer Ruhestellung in eine Wirkstellung verbringbares, hydrodynamisch wirksames Element (11) angeordnet ist.

## Claims

1. Device for depth control for a spool-type buoyant body (1) which is located under the surface of the water and contains at least one optical waveguide spool (7), with the first end of the optical waveguide being connected to an underwater vehicle, and with the second end being connected to a mobile weapon (8) which moves away from the underwater vehicle after being launched, **characterized**
- **in that** the device for depth control (2) has an arming apparatus (3) which enables the device for depth control on separation of the spool-type buoyant body (1) from the mobile weapon (8, 3a),
- **in that** the device for depth control (2) contains a spring-loaded valve (4) for filling an internal area (5) in the spool-type buoyant body (1), which valve (4) opens against the externally acting water pressure by means of an adjustable spring force (6) on reaching the desired depth below the surface of the water, and
- **in that** the valve (4) closes against the spring force (6) on the basis of the externally acting water pressure, as the spool-type buoyant body (1) sinks.

2. Device for depth control for a spool-type buoyant body according to Claim 1, **characterized in that** the spool-type buoyant body (1) has a device for increasing the buoyancy, which device can be initiated on sinking to a selectable depth.

3. Device for depth control for a spool-type buoyant body according to Claim 2, **characterized in that** the device for increasing the buoyancy has at least one mass (9) which is arranged on the outside of the spool-type buoyant body (1) and can be initiated as a function of depth by the spool-type buoyant body (1).

4. Device for depth control for a spool-type buoyant body according to Claim 2, **characterized in that** the device for increasing the buoyancy contains at least one buoyancy-producing means (10) which displaces at least some of the water which is located in the internal area (5) of the spool-type buoyant body (1).

5. Device for depth control for a spool-type buoyant body according to Claim 4, **characterized in that** the buoyancy-producing means (10) produces gas over a selectable time period.

6. Device for depth control for a spool-type buoyant body according to one of Claims 1 to 5, **characterized in that** at least one hydrodynamically acting element (11) which can be deployed from a rest position to an effective position, is arranged on the outside of the spool-type buoyant body (1).

## Revendications

1. Dispositif de régulation de la profondeur pour un flotteur porté par une bobine (1) disposé sous la surface de l'eau, lequel comprend au moins une bobine de guide d'onde optique (7), la première extrémité du guide d'onde optique étant connectée à un véhicule sous-marin et la deuxième extrémité étant connectée à un corps actif (8) mobile s'écartant du véhicule sous-marin après le départ,
**caractérisé en ce que**
- le dispositif de régulation de la profondeur (2) présente un dispositif de déverrouillage (3), qui, lors de la séparation du flotteur porté par la bobine (1) du corps actif mobile (8, 3a) libère le dispositif de régulation de la profondeur,
- le dispositif de régulation de la profondeur (2) contient une soupape (4) sollicitée par ressort pour remplir un espace interne (5) du flotteur porté par la bobine (1), laquelle s'ouvre à l'encontre de la pression d'eau agissant depuis l'extérieur au moyen d'une force de ressort ajustable (6) une fois atteinte la profondeur souhaitée sous la surface de l'eau, et
- la soupape (4) se ferme au fur et à mesure de l'enfoncement du flotteur porté par la bobine (1) du fait de la pression de l'eau agissant depuis l'extérieur, à l'encontre de la force de ressort (6).

2. Dispositif de régulation de la profondeur pour un flotteur porté par une bobine selon la revendication 1, **caractérisé en ce que** le flotteur porté par la bobine (1) présente un dispositif pour augmenter la sustentation, qui peut être déclenché à une profondeur sélectionnable lors de l'enfoncement.

3. Dispositif de régulation de la profondeur pour un flotteur porté par une bobine selon la revendication 2, **caractérisé en ce que** le dispositif pour augmenter la sustentation présente au moins une masse (9) disposée à l'extérieur sur le flotteur porté par la bobine (1), laquelle peut être libérée du flotteur porté par la bobine (1) en fonction de la profondeur.

4. Dispositif de régulation de la profondeur pour un flotteur porté par une bobine selon la revendication 2, **caractérisé en ce que** le dispositif pour augmenter la sustentation contient au moins un moyen pour produire la sustentation (10), qui déplace au moins en partie l'eau se trouvant dans l'espace interne (5) du flotteur porté par la bobine (1).

5. Dispositif de régulation de la profondeur pour un flotteur porté par une bobine selon la revendication 4, **caractérisé en ce que** le moyen produisant la sustentation (10) produit du gaz pendant un intervalle de temps sélectionnable.

6. Dispositif de régulation de la profondeur pour un flotteur porté par une bobine selon l'une quelconque des revendications 1 à 5, **caractérisé en ce qu'**au moins un élément (11) à effet hydrodynamique pouvant être amené d'une position de repos dans une position active est disposé du côté extérieur du flotteur porté par la bobine (1).
